# EUROPEAN PATENT APPLICATION

(11) **EP 3 034 556 A1**
(43) Date of publication of application: **22.06.2016**
(21) Application number: 14836277.5
(22) Date of filing: 12.08.2014
(51) Int. Cl.: C08L 27/16, B32B 27/18, B32B 27/30, C08J 5/18, C08L 33/04

(54) **FILM COMPRISING VINYLIDENE FLUORIDE RESIN, LAMINATED FILM, AND LAMINATE**

(30) Priority: 14.08.2013 JP 2013168523
(71) Applicant: Mitsubishi Rayon Co., Ltd., Tokyo 100-8253 (JP)
(72) Inventor: KONOKAWA Yuhei, Otake-shi Hiroshima 739-0693 (JP)
(74) Representative: Merkle, Gebhard
(86) International application number: PCT/JP2014/071282
(87) International publication number: WO 2015/022957

(57) **Abstract**

The present invention relates to a film which comprises a resin composition comprising an acrylic resin (A) and a vinylidene fluoride resin (B), wherein the acrylic resin (A) is composed of an acrylic monomer (a-1) unit and an ultraviolet ray absorbing monomer (a-2) unit, and the ratio of the amount of the ultraviolet ray absorbing monomer (a-2) unit in the acrylic resin (A) to the total mass of all of monomer units in the acrylic resin (A) is 4 to 25 mass%. According to the present invention, it becomes possible to provide a film which comprises a vinylidene fluoride resin, can maintain a high total light transmittance and a low haze value for a long period, and has excellent ultraviolet ray blocking performance.

## Description

### TECHNICAL FIELD

The present invention relates to a film containing a vinylidene fluoride resin, a laminated film, and a laminate. The present invention claims priority from Japanese Patent Application No. 2013-168523, filed on August 14, 2013 in Japan, and the content of which are incorporated herein by reference.

### BACKGROUND ART

A vinylidene fluoride film has excellent weather resistance, heat resistance, chemical resistance, and mechanical properties, and it is used after being laminated on plastics like vinyl chloride resin, polyester resin, polyolefin resin, acrylic resin, ABS resin, and polycarbonate resin, or a metal plate like stainless steel plate, aluminum plate, and zinc-plated steel plate.

When it is used for a use in which transparency is required, for example, if the vinylidene fluoride film is used as a surface coating material for a solar battery, the film is required to have high visible light transmittance and block ultraviolet ray while maintaining a low haze value.

Namely, the vinylidene fluoride film is required to have, according to blocking of ultraviolet ray with wavelength of 360 nm or less, suppressed photodegradation of a sealing agent like EVA used for adhesion between a vinylidene fluoride film and solar battery cell, a barrier film, a polyester film used for a back sheet, and adhesives for laminating them.

In order to have sufficient blocking of ultraviolet ray, for a film with film thickness of 50 µm, for example, it is necessary to add an ultraviolet absorbing agent in an amount of at least 2% by weight or more. However, in the case of a vinylidene fluoride resin, there is a problem that, as it has poor compatibility with an ultraviolet absorbing agent, a high film haze value is yielded when it is added to the film in an amount of 2% by weight or more.

As it is shown in Comparative examples of the present invention that are described below, the vinylidene fluoride film formed from a resin composition which is obtained by mixing polyvinylidene fluoride, polymethyl methacrylate, and, as an ultraviolet absorbing agent, 2-(2H-benzotriazol-2-yl)-p-cresol can have both high visible light transmittance and ultraviolet ray blocking property. In addition to 2-(2H-benzotriazol-2-yl)-p-cresol, there are several kinds of ultraviolet absorbing agents which can block ultraviolet ray without lowering the visible light (wavelength of 380 to 780 nm) transmittance. However, the vinylidene fluoride film containing those ultraviolet absorbing agents according to a technique of a related art has a problem in that, as it is difficult to maintain for a long period of time the ultraviolet blocking property, the ultraviolet ray blocking performance is lost within relatively short time.

Meanwhile, in Patent Documents 1 and 2, determinations are made for having ultraviolet ray blocking for a long period of time by having an ultraviolet absorbing agent prepared to have high molecular weight. However, according to a follow-up test by inventors of the present invention, it is necessary that the film thickness has to be increased or the methacrylic resin needs to be blended in a large amount, because the introduction rate of an ultraviolet absorbing monomer unit to an acrylic resin is low. Furthermore, in that case, it is difficult to have a film with good transparency, chemical resistance, and heat resistance.

Furthermore, in Patent Document 3, it is described that, by mixing an acrylic resin, which is obtained by copolymerization of more than 30% by mass of an ultraviolet absorbing monomer with methyl methacrylate, with a small amount of a vinylidene fluoride resin, a vinylidene fluoride resin exhibiting excellent ultraviolet blocking performance can be obtained. However, this vinylidene fluoride resin has a problem of having a high haze value.

### CITATION LIST

### PATENT DOCUMENT

Patent Document 1: WO 2006/016618 A
Patent Document 2: WO 2007/004670 A
Patent Document 3: JP 51-76345 A

### DISCLOSURE OF THE INVENTION

### PROBLEM TO BE SOLVED BY THE INVENTION

An object of the present invention is to provide a film containing a vinylidene fluoride resin, a laminated film, and a laminate which can maintain high total light transmittance and a low haze value for a long period of time and have a high ultraviolet ray blocking property.

### MEANS FOR SOLVING PROBLEM

The object described above is achieved by the following [1] to [15] of the present invention.
[1] A film containing a resin composition which contains an acrylic resin (A) and a vinylidene fluoride resin (B), in which:
   the acrylic resin (A) is composed of an acrylic monomer (a-1) unit and an ultraviolet ray absorbing monomer (a-2) unit, and
   the ratio of the ultraviolet ray absorbing monomer (a-2) unit in the acrylic resin (A) is 4 to 25% by mass relative to the total mass of all of monomer units in the acrylic resin (A).
[2] The film described in [1], in which (C)/(D) value is 0.2%/µm or less when a haze value of the film is (C)% and a thickness of the film is (D) µm.
[3] The film described in [1] or [2], in which the ratio of the ultraviolet ray absorbing monomer (a-2) unit in the acrylic resin (A) is 8 to 17% by mass relative to the total mass of all of monomer units in the acrylic resin (A).
[4] The film described in any one of [1] to [3], in which the vinylidene fluoride resin (B) is a homopolymer of vinylidene fluoride.
[5] The film described in any one of [1] to [4], in which the acrylic resin (A) is a resin which is obtained by suspension polymerization of a monomer mixture containing the acrylic monomer (a-1) and the ultraviolet ray absorbing monomer (a-2).
[6] The film described in any one of [1] to [5], in which the content of the acrylic resin (A) in the resin composition is 15 to 75% by mass relative to the total amount of the acrylic resin (A) and the vinylidene fluoride resin (B).
[7] The film described in any one of [1] to [6], in which the content of the acrylic resin (A) in the resin composition is 19 to 40% by mass relative to the total amount of the acrylic resin (A) and the vinylidene fluoride resin (B).
[8] The film described in any one of [1] to [7], in which the acrylic monomer (a-1) is alkyl methacrylate having an alkyl group with 1 to 4 carbon atoms.
[9] The film described in any one of [1] to [8], in which the ultraviolet ray absorbing monomer (a-2) is one or more monomers selected from a benzotriazole monomer, a benzophenone monomer, and a triazine monomer.
[10] The film described in any one of [1] to [9], in which the ultraviolet ray absorbing monomer (a-2) is a benzotriazole monomer.
[11] A laminated film having a thermoplastic resin layer laminated on the film described in anyone of [1] to [10].
[12] A laminate having the laminated film described in [11] laminated on a substrate.
[13] Use of the film described in any one of [1] to [10] for a film for protecting an interior and exterior car component, an interior and exterior construction component, and a solar battery component.
[14] Use of the laminated film described in [11] for a film for protecting an interior and exterior car component, an interior and exterior construction component, and a solar battery component.
[15] Use of the laminate described in [12] for a film for protecting an interior and exterior car component, an interior and exterior construction component, and a solar battery component.

### EFFECT OF THE INVENTION

According to the present invention, a film containing a vinylidene fluoride resin, a laminated film, and a laminate which can maintain high total light transmittance for a long period of time and have excellent ultraviolet ray blocking performance can be provided.

### MODE(S) FOR CARRYING OUT THE INVENTION

The film of the present invention is composed of a resin composition which contains the acrylic resin (A) and the vinylidene fluoride resin (B).

### <Acrylic resin (A)>

The acrylic resin (A) is a resin which consists of the acrylic monomer (a-1) unit and the ultraviolet ray absorbing monomer (a-2) unit, in which the ratio of the amount of the ultraviolet ray absorbing monomer (a-2) unit in the acrylic resin (A) is 4 to 25% by mass relative to the total mass of all of monomer units in the acrylic resin (A).

### [Acrylic monomer (a-1)]

The acrylic monomer (a-1) unit (hereinbelow, the acrylic monomer (a-1) may be referred to as "monomer (a-1)" and the acrylic monomer (a-1) unit may be referred to as "(a-1) unit") is introduced to the acrylic resin (A) to enhance the compatibility with the vinylidene fluoride resin (B).

Examples of the acrylic monomer (a-1) as a raw material of the (a-1) unit include methyl(meth)acrylate, ethyl(meth)acrylate, n-propyl(meth)acrylate, i-propyl(meth)acrylate, n-butyl(meth)acrylate, i-butyl(meth)acrylate, t-butyl(meth)acrylate, 2-ethylhexyl(meth)acrylate, lauryl(meth)acrylate, methacrylic acid, glycidyl(meth)acrylate, tetrahydrofurfuryl(meth)acrylate, allyl(meth)acrylate, 2-hydroxyethyl(meth)acrylate, hydroxypropyl(meth)acrylate, methoxyethyl(meth)acrylate, ethoxyethyl(meth)acrylate, diaminoethyl(meth)acrylate and a methyl chloride salt thereof, diethylaminoethyl(meth)acrylate and a benzyl chloride salt thereof, 2-methacryloyloxyethyl phthalic acid, and 2-methacryloyloxyethyl hexahydrophthalic acid.

It may be used either singly or in combination of two or more types.

Among them, from the viewpoint of obtaining a film with high heat resistance, alkyl methacrylate having an alkyl group with 1 to 4 carbon atoms is preferable. From the viewpoint of obtaining a film with even higher total light transmittance, methyl methacrylate is more preferable.

### [Ultraviolet ray absorbing monomer (a-2)]

The ultraviolet ray absorbing monomer (a-2) unit (hereinbelow, the ultraviolet ray absorbing monomer (a-2) may be referred to as "monomer (a-2)" and the ultraviolet ray absorbing monomer (a-2) unit may be referred to as "(a-2) unit") is introduced to the acrylic resin (A) to give an ultraviolet ray absorbing property to a film. The ratio of the ultraviolet ray absorbing monomer (a-2) in the acrylic resin (A) is 4 to 25% by mass relative to the total mass of all of monomer units in the acrylic resin (A). When it is within this range, the ultraviolet ray blocking performance can be maintained for a long period of time and a film having good transparency and chemical resistance can be obtained.

Examples of the ultraviolet ray absorbing monomer (a-2) as a raw material of this unit include a benzotriazole monomer, a benzophenone monomer, and a triazine monomer.

Examples of the benzotriazole monomer include 2-[2'-hydroxy-5'-((meth)acryloyloxymethyl)phenyl]-2H-benzotriazole, 2-[2'-hydroxy-5'-((meth)acryloyloxyethyl)phenyl]-2H-benzotriazole, 2-[2'-hydroxy-3'-t-butyl-5'-((meth)acryloyloxyethyl)phenyl]-2H-benzotriazole, 2-[2'-hydroxy-5'-t-butyl-3'-((meth)acryloyloxyethyl)phenyl]-2H-benzotriazole, 2-[2'-hydroxy-5'-((meth)acryloyloxyethyl)phenyl]-5-chloro-2H-benzotriazole, and 2-[2'-hydroxy-5'-((meth)acryloyloxyethyl)phenyl]-5-methoxy-2H-benzotriazole.

Examples of the benzophenone monomer include 2-hydroxy-4-methacryloyloxybenzophenone, 2-hydroxy-4-[2-(meth)acryloyloxy]ethoxybenzophenone, 2-hydroxy-4-[2-(meth)acryloyloxy]butoxybenzophenone, 2,2'-dihydroxy-4-[2-(meth)acryloyloxy]ethoxybenzophenone, 2-hydroxy-4-[2-(meth)acryloyloxy]ethoxy-4'-(2-hydroxyethoxy)benzophenone, 2-hydroxy-3-t-butyl-4-[2-(meth)acryloyloxy]ethoxybenzophenone, and 2-hydroxy-3-t-butyl-4-[2-(meth)acryloyloxy]butoxybenzophenone.

Examples of the triazine monomer include 2-[2-hydroxy-4-(2-(meth)acryloyloxyethoxy)phenyl]-4,6-diphenyl-1,3,5-triazine, 2,4-diphenyl-6-[2-hydroxy-4-(2-(meth)acryloyloxy)phenyl]-1,3,5-triazine, 2,4-bis(2-methylphenyl)-6-[2-hydroxy-4-(2-(meth)acryloyloxyethoxy)phenyl]-1,3,5-triazine, 2,4-bis(2-methoxyphenyl)-6-[2-hydroxy-4-(2-(meth)acryloyloxyethoxy)phenyl]-1,3,5-triazine, 2,4-bis(2-ethylphenyl)-6-[2-hydroxy-4-(2-(meth)acryloyloxyethoxy)phenyl]-1,3,5-triazine, 2,4-bis(2-ethoxyphenyl)-6-[2-hydroxy-4-(2-(meth)acryloyloxyethoxy)phenyl]-1,3,5-triazine, 2,4-diphenyl-6-[2-hydroxy-4-(2-(meth)acryloyloxyethoxy)phenyl]-1,3,5-triazine, 2,4-bis(2-methylphenyl)-6-[2-hydroxy-4-(2-(meth)acryloyloxyethoxy)phenyl]-1,3,5-triazine, 2,4-bis(2-methoxyphenyl)-6-[2-hydroxy-4-(2-(meth)acryloyloxyethoxy)phenyl]-1,3,5-triazine, 2,4-bis(2-ethylphenyl)-6-[2-hydroxy-4-(2-(meth)acryloyloxyethoxy)phenyl]-1,3,5-triazine, 2,4-bis(2-ethoxyphenyl)-6-[2-hydroxy-4-(2-(meth)acryloyloxyethoxy)phenyl]-1,3,5-triazine, 2,4-bis(2,4-dimethoxyphenyl)-6-[2-hydroxy-4-(2-(meth)acryloyloxyethoxy)phenyl]-1,3,5-triazine, 2,4-bis(2,4-dimethylphenyl)-6-[2-hydroxy-4-(2-(meth)acryloyloxyethoxy)phenyl]-1,3,5-triazine, 2,4-bis(2,4-diethoxyphenyl)-6-[2-hydroxy-4-(2-(meth)acryloyloxyethoxy)phenyl]-1,3,5-triazine, 2,4-bis(2,4-diethylphenyl)-6-[2-hydroxy-4-(2-acryloyloxyethoxy)phenyl]-1,3,5-triazine, 2-[2-hydroxy-4-(11-acryloyloxy-undecyloxy)phenyl]-4,6-diphenyl-1,3,5-triazine, 2-[2-hydroxy-4-(11-methacryloyloxy-undecyloxy)phenyl]-4,6-diphenyl-1,3,5-triazine, 2-[2-hydroxy-4-(11-acryloyloxy-undecyloxy)phenyl]-4,6-bis(2,4-dimethylphenyl)-1,3,5-triazine, 2,4-bis(2,4-dimethylphenyl)-6-[2-hydroxy-4-(11-methacryloyloxyundecyloxy)phenyl]-1,3,5-triazine, and 2,4-bis(2,4-dimethylphenyl)-6-[2-hydroxy-4-(2-methacryloyloxyethoxy)phenyl]-1,3,5-triazine.

Each of the above monomers may be use either singly or in combination of two or more types.

In particular, 2-[2'-hydroxy-5'-(methacryloyloxyethyl)phenyl]-2H-benzotriazole, 2-hydroxy-4-methacryloyloxybenzophenone, and 2-hydroxy-4-[2-(meth)acryloyloxy]ethoxybenzophenone are preferred in that they have excellent ultraviolet ray absorbing performance.

### [Other monomers]

As long as it remains within the scope of the object of the present invention, other monomer units may be also contained in the acrylic resin (A) of the present invention.

A monomer to be a raw material of other monomer units is not particularly limited, but examples thereof include an aromatic vinyl monomer like styrene, a vinyl cyanide monomer like acrylonitrile, an unsaturated dicarboxylic acid anhydride like maleic anhydride and itaconic anhydride, N-phenyl maleimide, and N-cyclohexyl maleimide.

Content of the acrylic monomer (a-1) unit and the ultraviolet ray absorbing monomer (a-2) unit in the acrylic resin (A) can be obtained from calculation based on intensity of specific ¹H signal which is obtained by proton nuclear magnetic resonance (¹H-NMR) measurement.

Specifically, it can be obtained as follows: the acrylic resin (A) is dissolved in a deuterated solvent, for example, deuterated chloroform, at concentration of 5 mg/mL and subjected to ¹H-NMR measurement, and the ratio of peak intensity derived from the (a-2) unit relative to the total of peak intensity derived from the (a-1) unit and peak intensity derived from the (a-2) unit is expressed in terms of % by mass.

The mass average molecular weight of the acrylic resin (A) is preferably 200,000 or less, more preferably 150,000 or less, and even more preferably 100,000 or less. When it is within this range, good compatibility with the vinylidene fluoride resin (B) is obtained. Furthermore, the lower limit of the mass average molecular weight of the acrylic resin (A) is preferably 30,000 or more, more preferably 50,000 or more, and even more preferably 70,000 or more. When it is within this range, a film with low haze is obtained. The mass average molecular weight of the acrylic resin (A) can be obtained by performing gel permeation chromatography (GPC) measurement using tetrahydrofuran as a solvent and carrying out calibration by using polystyrene with known molecular weight as a reference sample. Thus, according to one aspect of the present invention, the mass average molecular weight of the acrylic resin (A) is preferably 30,000 to 200,000, more preferably 50,000 to 150,000, and even more preferably 70,000 to 100,000.

To have a film with low haze, the content of the ultraviolet ray absorbing monomer (a-2) unit in the acrylic resin (A) is 4 to 25% by mass relative to the total mass of all of monomer units in the acrylic resin (A). In addition, the upper limit of the ratio of the (a-2) unit is preferably 21% by mass or less, and more preferably 17% by mass or less. In addition, from the viewpoint of obtaining a film with excellent ultraviolet ray absorbing performance, the low limit of the (a-2) unit in the acrylic resin (A) is preferably 5% by mass or more, more preferably 7% by mass or more, and even more preferably 8% by mass or more. Namely, the ratio of the (a-2) unit in the acrylic resin (A) is preferably 5 to 21% by mass, more preferably 7 to 17% by mass, and even more preferably 8 to 17% by mass.

### [Method for producing the acrylic resin (A)]

The acrylic resin (A) of the present invention can be obtained by polymerization of a monomer mixture containing the acrylic monomer (a-1) and the ultraviolet ray absorbing monomer (a-2). Examples of the polymerization method include suspension polymerization, bulk polymerization, and solution polymerization. However, from the viewpoint of having increased introduction rate of an ultraviolet ray absorbing monomer unit to an acrylic resin by using an oil soluble polymerization initiator and being suitable for industrial production, the suspension polymerization is preferable.

As described herein, the "suspension polymerization" indicates polymerization which is performed after stirring and suspending a monomer mixture and a solvent. As a solvent, water is preferred.

As for the polymerization initiator used for suspension polymerization, an oil soluble polymerization initiator is preferable. Examples thereof include an azo initiator such as 2,2'-azobisisobutyronitrile, 2,2'-azobis-2-methylbutyronitrile, or 2,2'-azobis-2,4-dimethylvaleronitrile; and a peroxide initiator such as benzoyl peroxide, di-t-butyl peroxide, t-hexylperoxypyvalate, t-hexylperoxyisopropyl carbonate, t-butylperoxy2-ethyl hexanoate, and 1,1-di-t-butylperoxy-2-methylcyclohexane.

Among the polymerization initiators, considering the excellent handling property, benzoyl peroxide, 2,2'-azobisisobutyronitrile, 2,2'-azobis-2,4-dimethylvaleronitrile, and t-hexylperoxypyvalate are preferable.

The use amount of the polymerization initiator is preferably in the range of 0.001 to 3 parts by mass relative to 100 parts by mass of the monomer mixture described above. The polymerization temperature for suspension polymerization is preferably in the range of 50 to 150°C, and more preferably in the range of 50 to 130°C.

According to one aspect of the present invention, a chain transfer agent may be added during the production of the acrylic resin (A) by suspension polymerization. Examples of the chain transfer agent which is used during the suspension polymerization include t-butyl mercaptan, n-butyl mercaptan, n-octyl mercaptan, n-dodecyl mercaptan, and t-dodecane thiol.

The use amount of the chain transfer agent is preferably in the range of 0 to 3 parts by mass relative to 100 parts by mass of the monomer mixture described above.

According to one aspect of the present invention, a dispersion agent may be added during the production of the acrylic resin (A) by suspension polymerization. Examples of the dispersion agent which is used during the suspension polymerization include polyvinyl alcohol, an alkali meal salt of (meth)acrylic homopolymer or copolymer, a copolymer of methyl methacrylate and sodium salt of 2-sulfoethyl methacrylate, carboxy cellulose, gelatin, starch, barium sulfate, calcium sulfate, calcium carbonate, magnesium carbonate, and calcium phosphate. It may be used either singly or in combination of two or more types. Among them, it is preferable to use an alkali meal salt of (meth)acrylic homopolymer or copolymer or a copolymer of methyl methacrylate and sodium salt of 2-sulfoethyl methacrylate.

The use amount of the dispersion agent is preferably in the range of 0.01 to 5 parts by mass relative to 100 parts by mass of water as a solvent.

Furthermore, an electrolyte like sodium chloride, potassium chloride, sodium sulfate, potassium sulfate, and manganese sulfate can be used as a dispersion aid together with the dispersion agent, if necessary.

By adopting a polymerization method in which an oil soluble polymerization initiator is used, the ratio of the amount of the ultraviolet ray absorbing monomer (a-2) unit relative to the total mass of all of monomer units in the acrylic resin (A) can be made almost equivalent to the injection ratio of the ultraviolet ray absorbing monomer (a-2).

Thus, according to one aspect of the present invention, the ratio of the (a-2) unit in the acrylic resin (A) can be the injection ratio of the monomer (a-2).

According to one aspect of the method for producing the acrylic resin (A) of the present invention, the effect of having the polymerization rate of almost 100% can be obtained by using water as a solvent and an oil soluble initiator as a polymerization initiator, and performing suspension polymerization of a monomer mixture. As a result, as described above, control can be made such that the ratio of the ultraviolet ray absorbing monomer (a-2) unit in all of monomer units in the acrylic resin (A) is equivalent to the ratio of the ultraviolet ray absorbing monomer (a-2) contained in the monomer mixture.

### <Vinylidene fluoride resin (B)>

As described herein, the vinylidene fluoride resin (B) indicates a polymer which contains a vinylidene fluoride unit in an amount of 50% by mass or more. When the vinylidene fluoride resin (B) is a copolymer, examples of a copolymerizable component to be copolymerized with vinylidene fluoride include hexafluoropropylene and tetrafluoroethylene.

From the viewpoint of obtaining a film with good transparency and heat resistance, polyvinylidene fluoride is preferred as the vinylidene fluoride resin (B). The vinylidene fluoride resin (B) may be used either singly or in combination of two or more types.

Examples of the vinylidene fluoride resin (B), which is industrially obtainable, include Kynar760, Kynar740, Kynar720, and Kynar710 manufactured by Arkema; KFT#850, KFT#1000, and KFT#1100 manufactured by KUREHA CORPORATION; and Solef1006, 1008, 6008, 11008, 21508, 1010, 6010, 11010, 21510 manufactured by Solvay Solexis, Inc.

The mass average molecular weight of the vinylidene fluoride resin (B) can be obtained by performing gel permeation chromatography (GPC) measurement using dimethyl formamide as a solvent and carrying out calibration by using polystyrene with known molecular weight as a reference sample.

The mass average molecular weight of the vinylidene fluoride resin (B) is preferably 450,000 or less, more preferably 400,000 or less, and even more preferably 300,000 or less from the viewpoint of enhancing the productivity of a thin film. Furthermore, from the viewpoint of obtaining a film with low haze value, the lower limit of the mass average molecular weight of the vinylidene fluoride resin (B) is preferably 50,000 or more, more preferably 100,000 or more, and even more preferably 150,000 or more. The mass average molecular weight of the vinylidene fluoride resin (B) is preferably 50,000 to 450,000, more preferably 100,000 to 400,000, and even more preferably 150,000 to 300,000.

### <Film>

The film of the present invention is composed of a resin composition containing the acrylic resin (A) and the vinylidene fluoride resin (B).

As the content of the acrylic resin (A) relative to the total of the acrylic resin (A) and the vinylidene fluoride resin (B) decreases, a film with higher heat resistance is obtained. From the viewpoint of the heat resistance, the content of the acrylic resin (A) in the resin composition is, relative to the total amount of the acrylic resin (A) and the vinylidene fluoride resin (B), preferably 75% by mass or less, more preferably 30% by mass or less, and even more preferably 20% by mass or less.

Meanwhile, as the content of the acrylic resin (A) increases, a film with lower haze value is obtained. From the viewpoint of having a low haze value, the lower limit of the content of the acrylic resin (A) in the resin composition is preferably 5% by mass or more, more preferably 20% by mass, and even more preferably 70% by mass relative to the total amount of the acrylic resin (A) and the vinylidene fluoride resin (B).

Furthermore, according to one aspect of the present invention, the content of the acrylic resin (A) in the resin composition is preferably 5% by mass or more, more preferably 7% by mass or more, and even more preferably 13% by mass or more relative to the total amount of the acrylic resin (A) and the vinylidene fluoride resin (B) from the viewpoint of obtaining a film with excellent ultraviolet rat absorbing performance.

Considering the above, the content of the acrylic resin (A) relative to the total amount of the acrylic resin (A) and the vinylidene fluoride resin (B) is preferably 15 to 75% by mass, more preferably 19 to 40% by mass, and even more preferably 19 to 30% by mass.

Total light transmittance of the film is, when measured based on JIS K7361-1, preferably 93.1% or more, more preferably 93.6% or more, and even more preferably 93.9% or more.

Even when the same resin is used, film haze generally is higher for the film with high thickness. When the film haze value is (C)% and film thickness is (D) µm and the film haze value is measured based on JIS K7361-1, (C)/(D) is preferably 0 to 0.2%/µm, more preferably 0 to 0.16%/µm, and even more preferably 0 to 0.14%/µm.

For protecting an undercoating, % by mass of the ultraviolet ray absorbing monomer (a-2) unit in the acrylic resin (A) can be adjusted. To have similar light resistance among films with different thickness, it is sufficient to have the same mass of the ultraviolet ray absorbing monomer (a-2) unit separately contained in resin volume that is represented by "unit area × film thickness". For example, when the thickness is reduced to half, it is sufficient that the ratio of the ultraviolet ray absorbing monomer (a-2) unit relative to the total amount of the resin composition is increased by a factor of 2.

For protecting an undercoating from ultraviolet ray, the ultraviolet ray absorbing monomer (a-2) unit in the film has mass per unit area of preferably 0.6 g/m² or more, more preferably 0.8 g/m² or more, and even more preferably 1.5 g/m² or more.

Furthermore, the mass per unit area of the (a-2) unit in the film can be obtained by a method in which the ratio of the ultraviolet ray absorbing monomer (a-2) unit relative to the total mass of the resin composition is multiplied by the density and thickness of the resin composition.

As described herein, the expression "protecting an undercoating" means prevention of photodegradation.

Furthermore, the crystal heat of fusion of the film measured by the method described in JIS K7121, 3.(2) is preferably 18 J/g or more, more preferably 21 J/g or more, and even more preferably 24 J/g or more.

When the crystal heat of fusion of the film is 18 J/g or more, the film can be produced without having a film adhered on a cooling medium during film production and an occurrence of scratch or blocking during film conveying can be prevented, and therefore preferable.

The crystal heat of fusion of the film can be increased by increasing the content of the vinylidene fluoride resin (B) or by increasing the temperature of a cooling medium during film production. As the crystal heat of fusion and fusion peak temperature increase, a film with higher heat resistance is obtained.

In general, a film with low thickness can easily exhibit high transparency while high mechanical strength is easily obtained with high thickness. From this point of view, the film thickness is preferably 10 to 500 µm, more preferably 20 to 200 µm, and even more preferably 25 to 100 µm.

### [Method for producing film]

The film of the present invention is preferably produced by a method in which a resin composition containing the acrylic resin (A) and the vinylidene fluoride resin (B) is melt extruded and the obtained melt extrudate is brought into contact with at least one cooling medium, which is selected from a metal roll, a non-metal roll, and a metal belt, to form a film.

Examples of the melt extrusion method include a T die method and an inflation method. Among them, from the viewpoint of economic value, the T die method is preferable. The melt extrusion temperature is preferably 150 to 300°C. Furthermore, examples of an extruder include a monoaxial extruder and a biaxial extruder.

Examples of the metal roll include a metallic touch roll with polished surface and a roll used for sleeve touch mode, which consists of a metal sleeve (metallic thin film pipe) and a roll for molding, as described in Japanese Patent No. 2,808,251 or the pamphlet of International Publication No. 1997/28,950. Furthermore, examples of the non-metal roll include a touch roll made of silicone rubber. Furthermore, examples of the metal belt include a metallic endless belt.

When a method of forming a film according to sandwich between plural cooling media selected from a metal roll, a non-metal roll, and a metal belt is used, it is preferable that the melt extrudate is sandwiched while there is no bank (stagnant resin), and film forming is carried out by surface transfer without pressure rolling. When film forming is performed without forming a bank, the melt extrudate in the middle of cooling process is surface-transferred without pressure rolling so that the film obtained by this method can have lower heat shrinkage rate.

Meanwhile, when a film is formed according to sandwich between plural cooling media selected from a metal roll, a non-metal roll, and a metal belt, it is possible that a surface of at least one cooling medium is subjected to morphology processing like emboss processing or matt processing so that the morphology can be transferred onto a single or both surfaces of the film.

When the surface temperature of the cooling medium is 35°C or higher, a film with high heat resistance can be obtained. Furthermore, when the surface temperature of the cooling medium is 120°C or lower, a film with high transparency can be obtained.

### [Surface treatment]

If necessary, the surface of the film of the present invention can be subjected to a surface treatment for improving the adhesiveness with a material with different property. Examples of the surface treatment include a corona discharge treatment, an ozone treatment, a low temperature plasma treatment using oxygen gas or nitrogen gas, a glow discharge treatment, and an oxidation treatment using a chemical product or the like. Meanwhile, if necessary, a pre-treatment can be carried out for the surface treatment.

### [Various additives]

If necessary, the film of the present invention may contain various additives like a photostabilizer, a heat stabilizer, a blocking inhibitor like synthetic silica and silicone resin powder, a plasticizer, an anti-microbial agent, an anti-mold agent, a blueing agent, and an anti-static agent.

The photostabilizer is to prevent resin deterioration based on supplementing radicals generated in the resin and stabilization of them. Examples thereof include a hindered amine type or a phenol type photostabilizer like N-H type, N-CH₃ type, N-acyl type, and N-OR type. Content of the photostabilizer is, relative to 100 parts by mass of the total of the vinylidene fluoride resin (B) and the acrylic resin (A), preferably 1 to 10 parts by mass, for example.

The heat stabilizer is to prevent deterioration of resin caused by heat or the like, and examples thereof include a phenol-based, an amine-based, a sulfur-based, and a phosphate-based oxidation inhibitor. Content of the heat stabilizer is, relative to 100 parts by mass of the total of the vinylidene fluoride resin (B) and the acrylic resin (A), preferably 1 to 10 parts by mass, for example.

### <Laminated film>

The film of the present invention can be prepared as a laminated film by laminating a thermoplastic resin layer.

As a material constituting a thermoplastic resin layer, a known thermoplastic resin can be used and the examples thereof include the followings. An acrylic resin such as methyl polymethacrylic acid; an ABS resin (acrylonitrile-butadiene-styrene copolymer); an AS resin (acrylonitrile-styrene copolymer); a vinyl chloride resin; a polyolefin resin such as polyethylene, polypropylene, polybutene, or polymethylpentene; a polyolefin copolymer such as an ethylene-vinyl acetate copolymer or a saponified product thereof or an ethylene-(meth)acrylic acid ester copolymer; a polyester resin such as polyethylene terephthalate, polybutylene terephthalate, polyethylene naphthalate, polyarylate, or polycarbonate; a polyamide resin such as 6-nylon, 6,6-nylon, 6,10-nylon, or 12-nylon; a polystyrene resin; a fiber derivative such as cellulose acetate or nitrocellulose; a fluororesin such as polyvinyl fluoride, polyvinylidene fluoride, polytetrafluoroethylene, or an ethylene-tetrafluoroethylene copolymer; and a mixture, a composite, a laminate or the like of two or more kinds selected from them.

It is also possible that the thermoplastic resin is used singly.

If necessary, the material constituting the thermoplastic resin layer may be blended with a common blending agent as follows: an anti-oxidant, a lubricating agent, a processing aid, a plasticizer, an anti-shock agent, a foaming agent, a filler, an anti-microbial agent, an anti-mold agent, a release agent, an anti-static agent, a coloring agent, an ultraviolet absorbing agent, a photostabilizer, a heat stabilizer, and a flame retardant.

Thickness of the thermoplastic resin layer can be suitably determined as it is required. In general, it is preferably set at 1 to 500 µm or so. Meanwhile, with regard to the laminate described below, the thermoplastic resin layer preferably has thickness which can cover a surface defect on the substrate so that the outer film appearance shows a complete and smooth top surface.

Furthermore, the thickness of the thermoplastic resin layer means the distance from an interface with the film of the present invention to a surface of the thermoplastic resin layer in contact with air. Furthermore, the thickness can be measured by a method in which a film thickness meter is used if the measurement can be made before lamination and the film thickness of the present invention is subtracted from total thickness after the lamination, a method in which thickness is directly measured by observing a cross-surface, or a method in which a film thickness meter for calculation from light absorbance based on use of a density difference compared to the film of the present invention or a film thickness meter for calculation from a difference in interference of reflected light is used.

Examples of a method for obtaining a laminated film include a method in which a coating liquid containing the above thermoplastic resin is coated on a film, and a known method like heat lamination, dry lamination, wet lamination, or hot melt lamination of the thermoplastic resin on a film. Furthermore, it is possible that the film and thermoplastic resin layer are laminated by co-extrusion method or extrusion lamination. Furthermore, it is possible that, for a resin which is difficult to apply for heat fusion like polyolefin resin, lamination is made via an adhesive layer. Namely, the laminated film can be a film in which the thermoplastic resin layer is laminated on the film via an adhesive layer.

### <Laminate>

The film or laminated film can be prepared as a laminate by laminating it on a substrate. Examples of a substrate material include a resin: a wood plate like single wood plate, a plywood plate, a particle board, and a medium density fiber (MDF) plate; a wooden plate like wooden fiber plate; and a metal like iron and aluminum.

Herein, when a resin is used as a substrate, the resin described below, which is molded to have a film shape, is preferably used.

According to one aspect of the present invention, the laminate is provided with a substrate, a thermoplastic resin layer, and a film, and it is preferable that, on top of the substrate, the thermoplastic resin layer is laminated and, on top of the thermoplastic resin layer, the film is laminated.

Furthermore, according to one aspect of the present invention, the laminate is provided with a substrate, a thermoplastic resin layer, and a film, and it is preferable that, on top of the substrate, the film is laminated and, on top of the film, the thermoplastic resin layer is laminated.

As for the resin, a known resin can be used, and examples thereof include the followings: a polyolefin resin such as polyethylene, polypropylene, polybutene, polymethylpentene, an ethylene-propylene copolymer, an ethylene-propylene-butene copolymer, or an olefin thermoplastic elastomer; a thermoplastic or thermosetting resin for universal use including a polystyrene resin, an acrylic resin such as an ABS resin (acrylonitrile-butadiene-styrene copolymer), an AS resin (acrylonitrile-styrene copolymer), or methyl polymethacrylic acid, a urethane resin, an unsaturated polyester resin, and an epoxy resin; an engineering resin for universal use including a polyphenyleneoxide polystyrene resin, polycarbonate resin, polyacetal, polycarbonate modified polyphenylene ether, and polyethylene terephthalate; a super engineering resin such as polysulfone, polyphenylene sulfuide, polyphenylene oxide, polyether imide, polyimide, liquid crystalline polyester, or a polyallyl-based heat resistant resin; and a composite resin or various modified resins in which a reinforcing material like glass fiber or inorganic filler (talc, calcium carbonate, silica, mica, or the like), a modifying material like rubber component, or the like is added.

Among them, the substrate material is preferably a material capable of having melt fusion with a film containing a vinylidene fluoride resin and a laminated film thereof. Examples thereof include an acrylic resin, an ABS resin, an AS resin, a polystyrene resin, a polycarbonate resin, a vinyl chloride resin, a polyester resin, and a resin which contains them as a main component. From the viewpoint of adhesiveness, an acrylic resin, an ABS resin, an AS resin, a polycarbonate resin, a vinyl chloride resin, or a resin which contains them as a main component is preferable. An ABS resin, a polycarbonate resin, or a resin which contains them as a main component is particularly preferable.

Even if it is a resin without heat fusion like polyolefin resin, it can be used as a substrate after undergoing a surface treatment like the aforementioned corona discharge treatment and a low temperature plasma treatment, or forming of an adhesive layer or the like. The substrate obtained after such treatment can be adhered with one selected from a group consisting of a film containing a vinylidene fluoride resin and a laminated film thereof.

As for the method for producing the laminate of the present invention, if it is a laminate with even thickness or heat fusion can be performed for a substrate, a known method like heat lamination can be used. As described herein, the expression "even thickness" means that the lamination can be achieved without having a gap between the film or laminated film of the present invention and a substrate.

Furthermore, a substrate without heat fusion as described below can be laminated via an adhesive layer, for example.

Examples of a substrate material include, in addition to a wood plate like single wood plate, a plywood plate, a particle board, and a medium density fiber plate (MDF), a wooden plate like wooden fiber plate, a metal like iron and aluminum, glass or the like, various solar battery cells including a monocrystal silicone type solar battery cell, a polycrystal silicone type solar battery cell, an amorphous silicone type solar battery cell, a microcrystal silicone type solar battery cell, a globular silicone type solar battery cell, a thin film crystal silicone type solar battery cell, an amorphous silicone germanium type solar battery cell, a cadmium telluride type solar battery cell, an arsenic gallium type solar battery cell, a copper indium selenide type or the like, a chalcopyrite type solar battery cell in which a compound of Group I-III-VI consisting of Cu, In, Ga, Al, Se, S and the like is used, an organic thin film type solar battery cell, and a pigment sensitization type solar battery cell.

Namely, one aspect of the present invention is a laminate provided with a substrate, an adhesive layer, a thermoplastic resin layer, and a film, in which the adhesive layer is directly laminated on top of the substrate, the thermoplastic resin layer is laminated on top of the adhesive layer, and the film is laminated on top of the thermoplastic resin layer.

Another aspect of the present invention is a laminate provided with a substrate, an adhesive layer, a thermoplastic resin layer, and a film, in which the adhesive layer is directly laminated on top of the substrate, the film is laminated on top of the adhesive layer, and the thermoplastic resin layer is laminated on top of the film.

As for the material constituting the adhesive layer for a solar battery, one of the following resins or a mixture of two or more of them can be used: an acid modified polyolefin resin in which a polyolefin resin (ethylene-vinyl acetate copolymer, an ionomer-resin, an ethylene acrylic acid copolymer, an ethylene methacrylic acid copolymer, a polyethylene resin, polypropylene resin or the like) is modified with unsaturated carboxylic acid (acrylic acid, itaconic acid, maleic anhydride, or fumaric acid); a silane modified polyolefin resin in which modification is made with an unsaturated silane compound (vinyltrimethoxy silane, vinyltriethoxy silane, vinyltripropoxy silane, vinyltriisopropoxy silane, vinyltributoxy silane, vinyltripentyloxy silane, vinyltriphenoxy silane, vinyltribenzyloxy silane, vinyltrimethylene dioxy silane, vinyltriethylene dioxy silane, vinylpropionyloxy silane, vinyltriacetoxy silane, and vinyltricarboxy silane or the like); a polyvinyl butryal resin, a silicone resin, an epoxy resin, or the like.

Among them, it is preferable to use a silane modified polyolefin resin or an acid modified polyolefin resin having excellent adhesiveness.

For a case in which a three-dimensional laminate with uneven thickness is to be produced, a known method like insert molding and in-mold molding can be used. The in-mold molding is a method in which a film or a laminated film thereof is heated and subjected to vacuum molding in a mold having a vacuuming function, and a resin to be a substrate is injection-molded in the same mold to give a laminate in which the film or laminated film thereof is integrated with a substrate. From the viewpoint of the workability and economic value, the in-mold molding allowing performing of the film molding and injection molding in single step is preferable.

### <Use>

The film of the present invention, or a laminated film or a laminate thereof having high total light transmittance and excellent ultraviolet ray blocking property are preferably used for protecting polyester, polycarbonate, vinyl chloride, or the like. Examples of the use include the following products or constitutional members thereof.

As for the use in car exterior, examples include the followings: a weather strip, a bumper, a bumper guard, a side mirror guard, a body panel, a spoiler, a front grill, a strut mount, a wheel cap, a center filler, a door mirror, a center ornament, a side molding, a door molding, a window molding, a window, a head lamp cover, a tail lamp cover, a wind blocking component, or the like.

Namely, one aspect of the present invention is a use of the aforementioned film, laminated film, or laminate for a film for protecting a weather strip, a bumper, a bumper guard, a side mirror guard, a body panel, a spoiler, a front grill, a strut mount, a wheel cap, a center filler, a door mirror, a center ornament, a side molding, a door molding, a window molding, a window, a head lamp cover, a tail lamp cover, a wind blocking component, or the like.

As for the use in car interior, examples include the followings: an instrument panel, a console box, a meter cover, a door lock bezel, a steering wheel, a power window switch base, a center cluster, a dash board, or the like.

Thus, one aspect of the present invention is a use of the aforementioned film, laminated film, or laminate for a film for protecting an instrument panel, a console box, a meter cover, a door lock bezel, a steering wheel, a power window switch base, a center cluster, a dash board, or the like.

As for the use as a surface decorating material, examples include the followings: a front panel of an AV instrument or a home furniture, a button, an emblem, a housing for cellular phone, a display window, a button, or the like.

Thus, one aspect of the present invention is a use of the aforementioned film, laminated film, or laminate for a film for protecting a front panel of an AV instrument or home furniture, a button, an emblem, a housing for cellular phone, a display window, a button, or the like.

As for the use as a construction interior material, examples include the followings: a wall, a ceiling, a floor, or the like.

Thus, one aspect of the present invention is a use of the aforementioned film, laminated film, or laminate for a film for protecting a wall, a ceiling, a floor, or the like.

As for the use as a construction exterior material, examples include the followings: an exterior wall like siding, a rain fall receptacle, a fence, a roof, a pair of doors, a barge board, a window frame, a door, a handrail, a door sill, furniture like lintel, or the like.

Thus, one aspect of the present invention is a use of the aforementioned film, laminated film, or laminate for a film for protecting an exterior wall like siding, a rain fall receptacle, a fence, a roof, a pair of doors, a barge board, a window frame, a door, a handrail, a door sill, furniture like lintel, or the like.

As for the optical use, examples include the followings that are used for various displays: a Fresnel lens, a polarizing film, a polarizer protecting film, a phase difference film, a light diffusion film, a viewing angle enlarging film, a reflection film, an anti-reflection film, an anti-glare film, a brightness enhancing film, a prism sheet, a microlens array, a conductive film for touch panel, a film for light guiding, a film used as an electronic paper, or the like.

Thus, one aspect of the present invention is a use of the aforementioned film, laminated film, or laminate for a film for protecting a Fresnel lens, a polarizing film, a polarizer protecting film, a phase difference film, a light diffusion film, a viewing angle enlarging film, a reflection film, an anti-reflection film, an anti-glare film, a brightness enhancing film, a prism sheet, a micro lens array, a conductive film for touch panel, a film for light guiding, a film used as an electronic paper, or the like.

As for the use as a solar battery, examples include the followings: a film for protecting surface of a solar battery, a sealing film for a solar battery, a film for protecting back surface of a solar battery, a base film for a solar battery, a film for protecting a gas barrier film, or the like.

Thus, one aspect of the present invention is a use of the aforementioned film, laminated film, or laminate as a film for protecting surface of a solar battery, a sealing film for a solar battery, a film for protecting back surface of a solar battery, a base film for a solar battery, a film for protecting a gas barrier film, or the like.

As for the other use, examples include the followings: a film for protecting various containers or materials for packaging like a bottle, a container for cosmetics, a box for small things, or the like, a miscellaneous product like light-weight product or small-size product, a vinyl house for agricultural use, a film for protecting a sound-blocking board used in highways, a film for protecting an outermost surface of traffic signal board, or the like.

Thus, one aspect of the present invention is a use of the aforementioned film, laminated film, or laminate for a film for protecting a packaging container, a packaging material, a miscellaneous product, a vinyl house for agricultural use, a film for protecting a sound-blocking board used in highways, a film for protecting an outermost surface of traffic signal board, or the like.

### EXAMPLES

Hereinbelow, the present invention is described in view of the examples.

The term "parts" in the examples indicate "parts by mass".

Measurements of the total light transmittance, haze, ultraviolet ray transmittance, content of the ultraviolet ray absorbing monomer (a-2) in the acrylic resin (A), mass average molecular weight and molecular weight distribution of the acrylic resin (A), and total light transmittance of the laminated film were performed according to the methods that are described below.

### (1) Total light transmittance and haze

A film or a laminated film was subjected to a light resistance test using Eye Super Ultraviolet tester manufactured by DAINIPPON PLASTICS CO., LTD., that is, ultraviolet ray irradiation at irradiation intensity of 100 mW/cm² was performed for 300 hours with constant bath temperature of 63°C without having water spray. Before and after the light resistance test, total light transmittance of the film or laminated film was measured based on JIS K7361-1 by using a haze meter (product name: NDH2000, manufactured by NIPPON DENSHOKU INDUSTRIES Co., LTD). For the film, haze measurement was performed only before the light resistance test.

### (2) Ultraviolet ray transmittance

The light resistance test was performed for the film in the same manner as (1) above. Before and after the light resistance test, the ultraviolet ray transmittance at wavelength of 350 nm was measured by using an ultraviolet ray spectrophotometer (V-630 manufactured by JASCO Corporation).

### (3) Content of the ultraviolet ray absorbing monomer (a-2) unit in the acrylic resin (A)

Content of the ultraviolet ray absorbing monomer (a-2) unit in the acrylic resin (A) was measured by performing ¹H-NMR measurement (product name: JNM EX-270, manufactured by JEOL Ltd.).

The acrylic resin (A) was dissolved in deuterated chloroform to concentration of 5 mg/mL, and from the integrated intensity and peak position of the peak derived from the acrylic monomer (a-1) unit and the ultraviolet ray absorbing monomer (a-2) unit, mass ratio of the ultraviolet ray absorbing monomer (a-2) unit was quantified. The measurement temperature was 25°C, and the integration number was 64.

### (4) Mass average molecular weight and molecular weight distribution of the acrylic resin (A)

By performing gel permeation chromatography (GPC) which uses tetrahydrofuran as a solvent and carrying out calibration using polystyrene with known molecular weight as a reference sample, the mass average molecular weight (Mw) and number average molecular weight (Mn) were obtained. Mw/Mn was obtained as molecular weight distribution.

### [Production Example-1] Synthesis of the acrylic resin (A)-1

90.5 parts of methyl methacrylate (MMA) as the acrylic monomer (a-1), 9.5 parts of 2-[2'-hydroxy-5'-(methacryloyloxyethyl)phenyl]-2H-benzotriazole (product name: RUVA-93, manufactured by Otsuka Chemical Co., Ltd.) as the ultraviolet ray absorbing monomer (a-2), 0.1 pat of 2-2'azobisisobutyronitrile as an initiator, 0.2 part of n-octyl mercaptan as a chain transfer agent, and 200 parts of de-ionized water were added to a reaction vessel with volume of 10 L which is equipped with a stirrer, a reflux condenser, and an inlet for nitrogen gas.

The air inside the reaction vessel was fully replaced with nitrogen gas. Then, under stirring, 0.02 part of methyl methacrylic acid/potassium methacrylic acid/sodium 2-sulfoethyl methacrylic acid copolymer as a dispersion agent and 0.3 part of sodium sulfate were added. After heating to 80°C, suspension polymerization was performed under nitrogen gas stream. After observing an exothermic polymerization reaction, the temperature was increased to 95°C, maintained additionally for 30 minutes, and then the polymerization was terminated. The obtained polymer was dehydrated and dried to obtain the acrylic resin (A)-1. The polymerization conversion rate relative to the injection amount of the monomer (a-2) was 97%.

As a result of performing ¹H-NMR measurement for the acrylic resin (A)-1, it was found that the methyl methacrylate unit is present at 90.8% by mass and 2-[2'-hydroxy-5'-(methacryloyloxyethyl)phenyl]-2H-benzotriazole unit is present at 9.2% by mass. In addition, the mass average molecular weight was 115000 and the molecular weight distribution was 2.1. Those evaluations results are shown in Table 1.

### [Production Example-2] Synthesis of the acrylic resin (A)-2

The acrylic resin (A)-2 was obtained in the same manner as Production Example 1 except that the "MMA" of Production Example 1 is used in an amount of 95 parts and the "RUVA-93" is used in an amount of 5 parts. The evaluation results are shown in Table 1.

### [Production Example-3] Synthesis of the acrylic resin (A)-3

The acrylic resin (A)-3 was obtained in the same manner as Production Example 1 except that the "RUVA-93" of Production Example 1 is not used. The evaluation results are shown in Table 1.

### [Production Example-4] Synthesis of the acrylic resin (A)-4

To the same reaction vessel as Production Example 1, 200 parts of de-ionized water, 0.25 part of sodium dioctyl sulfosuccinate, 0.15 part of sodium formaldehyde sulfoxylate, 0.001 part of etheylenediamine tetraacetic acid-2-sodium, and 0.00025 of ferrous sulfate were injected.

Meanwhile, to 100 parts of a monomer mixture consisting of 90.5 parts of "MMA" and 9.5 parts of "RUVA-93", 0.1 part of cumene hydroperoxide and 0.2 part of n-octyl mercaptan were added to prepare a mixture of reaction solution.

After fully replacing the air inside the reaction vessel with nitrogen gas to have an oxygen-free state, the inside temperature was adjusted to 60°C, the above mixture of reaction solution was continuously added at ratio of 10 parts/hour, and the polymerization was further continued for 0.5 hour after the completion of the addition. The obtained latex was aggregated with calcium acetate followed by washing to obtain the acrylic resin (A)-4. The evaluation results are shown in Table 1.

### [Production Example-5] Synthesis of the acrylic resin (A)-5

The acrylic resin (A)-5 was obtained in the same manner as Production Example 1 except that the "MMA" of Production Example 1 is used in an amount of 84 parts and the "RUVA-93" is used in an amount of 16 parts, and the polymerization is performed after dissolving the "RUVA-93" by maintaining the reaction vessel at 40°C and increasing the temperature to 80°C. The evaluation results are shown in Table 1.

### [Production Example-6] Synthesis of the acrylic resin (A)-6

The acrylic resin (A)-6 was obtained in the same manner as Production Example 5 except that the "MMA" is used in an amount of 80 parts and the "RUVA-93" is used in an amount of 20 parts. The evaluation results are shown in Table 1.

### [Production Example-7] Synthesis of the acrylic resin (A)-7

The acrylic resin (A)-7 was obtained in the same manner as Production Example 5 except that the "MMA" is used in an amount of 73 parts and the "RUVA-93" is used in an amount of 27 parts. The evaluation results are shown in Table 1.

### [Production Example-8] Synthesis of the acrylic resin (A)-8

The acrylic resin (A)-8 was obtained in the same manner as Production Example 5 except that the "MMA" is used in an amount of 70 parts and the "RUVA-93" is used in an amount of 30 parts. The evaluation results are shown in Table 1.

### [Production Example-9] Synthesis of the acrylic resin (A)-9

The acrylic resin (A)-9 was obtained in the same manner as Production Example 5 except that the "MMA" is used in an amount of 50 parts and the "RUVA-93" is used in an amount of 50 parts. The evaluation results are shown in Table 1.

### [Production Example-10] Synthesis of the acrylic resin (A)-10

The acrylic resin (A)-10 was obtained in the same manner as Production Example 1 except that the "MMA" is used in an amount of 92.8 parts and the "RUVA-93" is used in an amount of 7.2 parts. The evaluation results are shown in Table 1.

### [Production Example-11] Synthesis of the acrylic resin (A)-11

The acrylic resin (A)-11 was obtained in the same manner as Production Example 1 except that the "MMA" is used in an amount of 91.0 parts and the "RUVA-93" is used in an amount of 9.0 parts. The evaluation results are shown in Table 1.

**[Table 1]**

| Production Example | The acrylic resin (A) | Injection ratio [%] | | Content [%] in the acrylic resin (A) | | (a-2) Polymerization conversion rate [%] | Mass average molecular weight Mw | Molecular weight distribution Mw/Mn |
|---|---|---|---|---|---|---|---|---|
| | | (a-1) | (a-2) | (a-1) Unit | (a-2) Unit | | | |
| | | MMA | RUVA-93 | MMA | RUVA-93 | | | |
| Production Example 1 | (A)-1 | 90.5 | 9.5 | 90.8 | 9.2 | 97 | 115000 | 2.1 |
| Production Example 2 | (A)-2 | 95.0 | 5.0 | 95.0 | 5.0 | 100 | 104000 | 2.0 |
| Production Example 3 | (A)-3 | 100 | - | 100 | - | - | 102000 | 2.0 |
| Production Example 4 | (A)-4 | 90.5 | 9.5 | 97.1 | 2.9 | 32 | 133000 | 2.2 |
| Production Example 5 | (A)-5 | 83.3 | 16.7 | 83.5 | 16.5 | 99 | 103000 | 2.0 |
| Production Example 6 | (A)-6 | 80.0 | 20.0 | 79.7 | 20.3 | 102 | 106000 | 2.1 |
| Production Example 7 | (A)-7 | 73.0 | 27.0 | 73.1 | 26.9 | 100 | 105000 | 2.2 |
| Production Example 8 | (A)-8 | 70.0 | 30.0 | 68.9 | 31.1 | 104 | 106000 | 2.1 |
| Production Example 9 | (A)-9 | 50.0 | 50.0 | 48.3 | 51.7 | 103 | 127800 | 2.3 |
| Production Example 10 | (A)-10 | 92.8 | 7.2 | 93.1 | 6.9 | 96 | 104000 | 2.0 |
| Production Example 11 | (A)-11 | 91.0 | 9.0 | 91.6 | 8.4 | 93 | 109000 | 2.0 |

### [Example 1]

### <1. Production of film>

20 parts of the acrylic resin (A)-1 obtained from Production Example 1, and, as the vinylidene fluoride resin (B)-1, 80 parts of polyvinylidene fluoride (Kynar720, vinylidene fluoride unit: 100% by mass) manufactured by Arkema were admixed with each other using a Henschel mixer. The mixture obtained accordingly was fed to a biaxial bent-type extruder (product name: TEM-35B, manufactured by TOSHIBA MACHINE CO., LTD.), which has been heated to 180 to 220°C, followed by kneading to give a pellet.

The obtained pellet was dried for 24 hours at 85°C, and then fed to a non-bent screw type extruder (L/D = 26) (MusashinoKikai Co., Ltd.) with a cylinder diameter of 40 mmϕ in which a T die with width of 300 mm and a screen mesh with 400 mesh are provided. The extruder was set to have the extrusion temperature of 180 to 220°C and T die temperature of 220°C, and then the extrusion was performed on one cooling roll at 80°C. As a result, the film 1 with thickness of 50 µm was obtained. The total light transmittance and ultraviolet ray transmittance of the film are shown in Table 2.

### <2. Production of laminated film>

The laminated film was also produced according to the following order. First, an urethane-based adhesive (product name: LIS603, manufactured by TOYO INK CO., LTD.) and an isocyanate-based curing agent (product name: DYNAGRAND CR-001, manufactured by TOYO INK CO., LTD.) at ratio of 10 : 1 (parts) were diluted with methyl ethyl ketone to have solid content of 25% by mass. Accordingly, the adhesive mixture liquid was prepared.

The adhesive mixture liquid was coated on a film and dried for 5 minutes in an oven at 80°C to form an adhesive layer. Subsequently, a vapor-deposited surface of a polyethylene terephthalate film in which silica has been vapor-deposited (product name: Tech Barrier L, manufactured by Mitsubishi Plastics, Inc., thickness of 12 µm) and the adhesive-layer formed surface of the film were laminated on each other. By maintaining the resultant for 7 days at 40°C, curing of the adhesive was completed to obtain the laminated film 1. The evaluation results are shown in Table 2.

Meanwhile, in Table 2, the concentration of the ultraviolet ray absorbing agent in the resin (% by mass) is a value obtained from calculation formula of "(Mass ratio of the ultraviolet ray absorbing monomer (a-2) unit in the acrylic resin (A) × Parts by mass of the acrylic resin (A))/100".

### [Example 2]

The film 2 with thickness of 50 µm and the laminated film 2 were obtained in the same manner as Example 1 except that the acrylic resin (A)-2 which has been obtained from Production Example 2 is used as the acrylic resin (A). The evaluation results are shown in Table 2.

### [Example 3]

The film 3 with thickness of 50 µm and the laminated film 3 were obtained in the same manner as Example 1 except that the acrylic resin (A)-5 which has been obtained from Production Example 5 is used as the acrylic resin (A). The evaluation results are shown in Table 2.

### [Example 4]

The film 4 with thickness of 50 µm and the laminated film 4 were obtained in the same manner as Example 1 except that the acrylic resin (A)-6 which has been obtained from Production Example 6 is used as the acrylic resin (A). The evaluation results are shown in Table 2.

### [Example 5]

The film 5 with thickness of 50 µm was obtained in the same manner as Example 1 except that the acrylic resin (A)-10 which has been obtained from Production Example 10 is used in an amount of 26 parts as the acrylic resin (A) and the vinylidene fluoride resin (B)-1 is used in an amount of 74 parts. The evaluation results are shown in Table 2.

### [Example 6]

The film 6 with thickness of 50 µm was obtained in the same manner as Example 1 except that the acrylic resin (A)-11 which has been obtained from Production Example 11 is used in an amount of 74 parts as the acrylic resin (A) and the vinylidene fluoride resin (B)-1 is used in an amount of 26 parts. The evaluation results are shown in Table 2.

### [Comparative Example 1]

The film C1 with thickness of 50 µm and laminated film C1 were obtained in the same manner as Example 1 except that the acrylic resin (A)-3 which has been obtained from Production Example 3 is used as the acrylic resin (A) and 2.1 parts of 2-(2H-benzotriazol-2-yl)-p-cresol (product name: Tinuvin P, manufactured by BASF SE) are used as an ultraviolet ray absorbing agent. The evaluation results are shown in Table 2.

### [Comparative Example 2]

The film C2 with thickness of 50 µm and laminated film C2 were obtained in the same manner as Example 1 except that the acrylic resin (A)-4 which has been obtained from Production Example 4 is used as the acrylic resin (A). The evaluation results are shown in Table 2.

### [Comparative Example 3]

The film C3 with thickness of 50 µm was obtained in the same manner as Example 1 except that the acrylic resin (A)-7 which has been obtained from Production Example 7 is used as the acrylic resin (A). The evaluation results are shown in Table 2.

### [Comparative Example 4]

The film C4 with thickness of 50 µm and laminated film C4 were obtained in the same manner as Example 1 except that the acrylic resin (A)-8 which has been obtained from Production Example 8 is used as the acrylic resin (A). The evaluation results are shown in Table 2.

### [Comparative Example 5]

The film C5 with thickness of 50 µm was obtained in the same manner as Example 1 except that the acrylic resin (A)-9 which has been obtained from Production Example 9 is used in an amount of 3.5 parts as the acrylic resin (A) and 96.5 parts of the vinylidene fluoride resin (B)-1 are used. The evaluation results are shown in Table 2.

It was found that, because the ultraviolet ray absorbing agent is not copolymerized with the acrylic resin (A) in Comparative example 1, the ultraviolet blocking performance is lost according to a light resistance test for a short time, and as the layer other than film was deteriorated by transmitted light, the total light transmittance of the laminated film was lowered.

It was found from Comparative example 2 that, as shown by Production Example 4, the ratio of the ultraviolet ray absorbing monomer (a-2) unit in the acrylic resin (A) is less than 4% by mass so that the ultraviolet blocking performance is lost according to a light resistance test for a short time. Furthermore, as the layer other than film was deteriorated by transmitted light, the total light transmittance of the laminated film was lowered.

It was found from Comparative examples 3 and 4 that, as the ratio of the ultraviolet ray absorbing monomer (a-2) unit in the acrylic resin (A) is more than 25% by mass, the compatibility between the acrylic resin (A) and the vinylidene fluoride resin (B) is poor so that the film haze value is higher than that of Example 4.

Similarly, it was found from in Comparative example 5 that, as the ratio of the ultraviolet ray absorbing monomer (a-2) unit in the acrylic resin (A) is high, a film with higher haze value than that of Example 1 was obtained.

**[Table 2]**

| | The acrylic resin (A) | | | Vinylidene fluoride resin (B) | | Ultraviolet ray absorbing agent | Concentration of ultraviolet ray absorbing agent in the resin [% by mass] | Thickness of film [µm] | Haze of film [%] | Total light transmittance of film [%] | | Ultraviolet ray transmittance of film [%] | | Ultraviolet ray transmittance of laminated film [%] | |
|---|---|---|---|---|---|---|---|---|---|---|---|---|---|---|---|
| | Type | (a-2) Unit [%] by mass] | Parts | Type | Parts | Parts | | | | Before test | After test | Before test | After test | Before test | After test |
| Example 1 | (A)-1 | 9.2 | 20 | (B)-1 | 80 | - | 1.8 | 50 | 7.2 | 94.4 | 93.1 | 0 | 1 | 90.5 | 90.0 |
| Example 2 | (A)-2 | 5.0 | 20 | (B)-1 | 80 | - | 1.0 | 50 | 6.3 | 94.4 | 93.2 | 0 | 10 | 90.3 | 74.2 |
| Example 3 | (A)-5 | 16.5 | 20 | (B)-1 | 80 | - | 3.3 | 50 | 7.4 | 93.8 | 93.2 | 0 | 0 | 90.2 | 89.9 |
| Example 4 | (A)-6 | 20.3 | 20 | (B)-1 | 80 | - | 4.1 | 50 | 8.5 | 92.6 | 92.5 | 0 | 0 | 89.2 | 89.4 |
| Example 5 | (A)-10 | 6.9 | 26 | (B)-1 | 74 | - | 1.8 | 50 | 4.2 | 93.3 | 92.9 | 0 | 5 | - | - |
| Example 6 | (A)-11 | 8.4 | 74 | (B)-1 | 26 | - | 6.2 | 50 | 0.2 | 92.8 | 92.6 | 0 | 0 | - | - |
| Comparative Example 1 | (A)-3 | 0 | 20 | (B)-1 | 80 | 2.1 | 2.1 | 50 | 7.2 | 93.3 | 93.3 | 0 | 67 | 89.8 | 75.4 |
| Comparative Example 2 | (A)-4 | 2.9 | 20 | (B)-1 | 80 | - | 0.6 | 50 | 6.4 | 93.4 | 93.3 | 0.4 | 53 | 89.8 | 75.3 |
| Comparative Example 3 | (A)-7 | 26.9 | 20 | (B)-1 | 80 | - | 5.4 | 50 | 75.2 | 78.7 | 84.0 | 0 | 0 | - | - |
| Comparative Example 4 | (A)-8 | 31.1 | 20 | (B)-1 | 80 | - | 6.2 | 50 | 90.0 | 77.0 | 85.5 | 0 | 0 | 76.9 | 82.7 |
| Comparative Example 5 | (A)-9 | 51.7 | 3.5 | (B)-1 | 96.5 | - | 1.8 | 50 | 73.6 | 93.1 | 76.6 | 0 | 15 | - | - |

### INDUSTRIAL APPLICABILITY

The film, laminated film, and laminate of the present invention can maintain high total light transmittance for a long period of time and have an excellent ultraviolet ray blocking property. Thus, they can be preferably used for protecting polyester, polycarbonate, vinyl chloride, or the like. Furthermore, the film, laminated film, and laminate of the present invention can be preferably used for an application including an interior and exterior car component, an interior and exterior construction component, a solar battery component or a constitutional member thereof, or the like.

## Claims

1. A film comprising a resin composition which comprises an acrylic resin (A) and a vinylidene fluoride resin (B), wherein:
the acrylic resin (A) comprises an acrylic monomer (a-1) unit and an ultraviolet ray absorbing monomer (a-2) unit; and
the ratio of the ultraviolet ray absorbing monomer (a-2) unit in the acrylic resin (A) is 4 to 25% by mass relative to the total mass of all of monomer units in the acrylic resin (A).

2. The film according to claim 1, wherein (C)/(D) value is 0.2%/µm or less when a haze value of the film is (C)% and a thickness of the film is (D) µm

3. The film according to claim 1, wherein the ratio of the ultraviolet ray absorbing monomer (a-2) unit in the acrylic resin (A) is 8 to 17% by mass relative to the total mass of all of monomer units in the acrylic resin (A).

4. The film according to claim 1, wherein the vinylidene fluoride resin (B) is a homopolymer of vinylidene fluoride.

5. The film according to claim 1, wherein the acrylic resin (A) is a resin which is obtained by suspension polymerization of a monomer mixture containing the acrylic monomer (a-1) and the ultraviolet ray absorbing monomer (a-2).

6. The film according to claim 1, wherein the content of the acrylic resin (A) in the resin composition is 15 to 75% by mass relative to the total amount of the acrylic resin (A) and the vinylidene fluoride resin (B).

7. The film according to claim 1, wherein the content of the acrylic resin (A) in the resin composition is 19 to 40% by mass relative to the total amount of the acrylic resin (A) and the vinylidene fluoride resin (B).

8. The film according to claim 1, wherein the acrylic monomer (a-1) is alkyl methacrylate having an alkyl group with 1 to 4 carbon atoms.

9. The film according to claim 1, wherein the ultraviolet ray absorbing monomer (a-2) is one or more monomers selected from a benzotriazole monomer, a benzophenone monomer, and a triazine monomer.

10. The film according to claim 1, wherein the ultraviolet ray absorbing monomer (a-2) is a benzotriazole monomer.

11. A laminated film having a thermoplastic resin layer laminated on the film according to any one of claims 1 to 10.

12. A laminate having the laminated film according to claim 11 laminated on a substrate.

13. Use of the film according to any one of claims 1 to 10 for a film for protecting an interior and exterior car component, an interior and exterior construction component, and a solar battery component.

14. Use of the laminated film according to claim 11 for a film for protecting an interior and exterior car component, an interior and exterior construction component, and a solar battery component.

15. Use of the laminate according to claim 12 for a film for protecting an interior and exterior car component, an interior and exterior construction component, and a solar battery component.
